# EUROPÄISCHE PATENTSCHRIFT

(11) **EP 2 784 466 B1**
(45) Veröffentlichungstag und Bekanntmachung des Hinweises auf die Patenterteilung: **09.03.2016**
(21) Anmeldenummer: 14466008.1
(22) Anmeldetag: 14.03.2014
(51) Int. Cl.: G01M 11/06

(54) **System einer die fortführende Fahrbahn simulierenden künstlichen Perspektive**
System for an artificial perspective simulating the continued roadway
Système de perspective artificielle simulant la chaussée en amont

(30) Priorität: 25.03.2013 CZ 20130216
(43) Veröffentlichungstag der Anmeldung: 01.10.2014
(73) Patentinhaber: Skoda Auto A.S., 293 60 Mladá Boleslav (CZ)
(72) Erfinder: Klucina, Jirí, CZ-293 01 Mladá Boleslav (CZ)

(56) Entgegenhaltungen:
- DE-A1-102004 042 233
- US-A1- 2006 239 019

## Beschreibung

### Technisches Gebiet

Die Erfindung betrifft ein System der künstlichen Perspektive, das die fortführende Fahrbahn im Lichtkegel der Fahrzeugscheinwerfer simuliert. Es ist für die visuelle Beurteilung des Lichtbildes der Scheinwerfer anwendbar.

### Bisheriger Stand der Technik

In der Praxis nutzen die Hersteller der Fahrzeuge oder Fahrzeugscheinwerfer für die visuelle Beurteilung des Lichtbildes der Scheinwerfer einen Raum mit einer Länge von mindestens 80 m und einer Breite von mindestens 8 m, der mit seiner Ausstattung und Fußbodenoberfläche (vertikale und waagerechte Fahrbahnmarkierung) einer Strasse der 1. Ordnung entspricht. Hier werden zwei nebeneinander stehende Fahrzeuge beurteilt. Diese in diesem Fall als Tunnel bezeichneten Räume werden vorteilhaft insbesondere während der Prüfungen bzw. für die visuelle Beurteilung des Lichtbildes der Scheinwerfer bei den noch geheimgehaltenen Konzept- und Prototypenfahrzeuge genutzt.

Die Realitätstreue bzw. Simulation der Fahrbahn ist direkt proportional zu den Abmessungen des Tunnels, insbesondere der Länge. Der Nachteil des bestehenden Standes der Technik liegt darin, dass der Tunnel mindestens 80 Meter lang sein muß, damit der Fahrzeugfahrer den Eindruck hat, dass er auf einer Fahrbahn und nicht im abgeschlossenem Raum ist. Wenn kein Raum für den Tunnel mit einer Länge von wenigstens 80 m verfügbar ist, sind die Prüfungen des Fahrzeuges und der Scheinwerfer ungenügend.

Zum Stand der Technik gehören die Dokumente US 2006/239019 A1 und DE 10 2004 042233 A1.

Dokument US 2006/239019 A1 offenbart ein System einer die fortführende Fahrbahn im Lichtprüftunnel simulierenden künstlichen Perspektive. Die Länge des Lichtprüftunnels kann auch 80 m kleiner sein. Dokument DE 10 2004 042233 A1 beschreibt einen Auf- und Abwickelmechanismus.

Nachteil dieses Standes der Technik ist, dass bei den kürzeren Lichtprüftunneln eine kostengünstige und effektive Lösung für die Simulation der fortführenden Fahrbahn fehlt.

### Darstellung der Erfindung

Die Aufgabe wird durch die erfindungsgemäße technische Lösung gelöst. Falls kein ausreichend langer Tunnel zur Verfügung steht, muss die fortführende Fahrbahn simuliert werden und zwar so, dass der resultierende Eindruck für den Fahrer in der rechten sowie linken Fahrspur perfekt ist, wenn im Raum das Licht ausgeschaltet wird und als einzige Lichtquelle die Scheinwerfer der beurteilten Fahrzeuge sind.

Das System basiert auf wenigstens einer großflächigen Leinwand aus verschiedenen lichtschluckenden Texturen, in vorteilhafter Ausführung zum Beispiel aus extrem lichtschluckendem Samt (sog. Mitternacht Samt). Auf den Leinwänden sind Formen aus verschiedenen hellen und reflektierenden Stoffen angebracht, welche die Fahrbahn für die Augen der Fahrer in der linken sowie rechten Fahrspur nach physikalischen Gesetzen und der darstellenden Geometrie simulieren. Beide Leinwände sind zwischen den Wänden des Lichtprüftunnels mithilfe der Fahrschienen und Reiter aufgespannt. Für den Wechsel zwischen rechten und linken Sicht dienen zwei fernbediente Rohrmotoren, die in den Wickelwellen angeordnet sind. An diesen Wellen sind die Leinwände mit Seilen befestigt, diese Verbindung stellt die Bewegung der Leinwände nach oben und nach unten entsprechend dem Bedarf sicher. Die mechanischen Teile sind mit Vorhängen aus extrem lichtschluckenden Stoffen abgedeckt, zum Beispiel aus extrem lichtschluckendem Samt (sog. Mitternacht Samt). Das System als Gesamtheit simuliert treu die fortführende Fahrbahn abwechselnd für beide Fahrer in Fahrzeugen mit den zu beurteilenden Scheinwerfern. Die Länge des Tunnels kann so kürzer als 80 m sein, in vorteilhafter Ausführung sogar 50 m.

### Übersicht der Figuren der Zeichnungen

Die Erfindung wird anhand schematischer Abbildungen näher erläutert, wobei die Fig. 1 die Lösung des Tunnels mit dem System einer die fortführende Fahrbahn simulierenden künstlichen Perspektive in einer Seitenansicht darstellt, die Fig. 2 das Innere des Tunnels mit großflächiger Leinwand in einer Ansicht von der linken Seite und die Fig. 3 das Innere des Tunnels mit großflächiger Leinwand in einer Ansicht von der rechten Seite darstellt.

### Bezugszeichenliste

1 - Tunnel
2 - Fußboden des Tunnels
3 - Wand am Tunnelende
4 - Decke des Tunnels
5 - linke Fahrbahnseite
6 - rechte Fahrbahnseite
7 - Fahrbahn
10,10'- Fahrschienen
11,11' - Seile
12,12' - Wickelwellen mit integrierten Rohrmotoren
15, 15' - Leinwände mit Figuren für linke und rechte Sichtseite
20 - Gegenstände (Leitposten mit Rückstrahlern) aus unterschiedlich hellen und reflektierenden Stoffen, die an der großflächigen Leinwand angebracht sind
21 - Leitposten mit Rückstrahlern
22 - angedeutete Leitposten mit Rückstrahlern falls der Tunnel wenigstens 80 m lang ist, also ohne notwendiger Nutzung der Leinwand
25 - horizontale Verkehrszeichen auf der Fahrbahn
26 - horizontale Verkehrszeichen aus verschieden hellen und reflektierende Stoffen an großflächiger Leinwand befestigt
50 - Fahrzeug
dt - Länge des Tunnels
svsp - Richtung der Ab- und Aufwickeln der großflächigen Leinwand
splp - Richtung der Seilbewegung mit der großflächigen Leinwand
spr-Sichtrichtung des Fahrers

### Ausführungsbeispiele der Erfindung

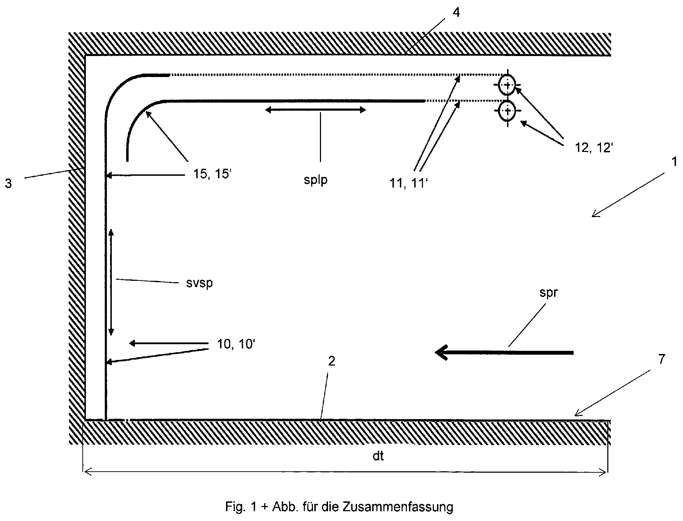

Die Fig. 1 zeigt die Lösung des Lichtprüftunnels 1 mit dem System einer die fortführende Fahrbahn simulierenden künstlichen Perspektive 7 in einer Seitenansicht.

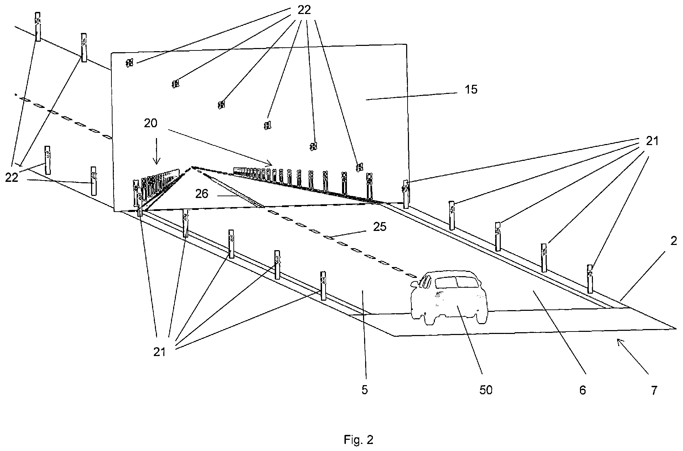

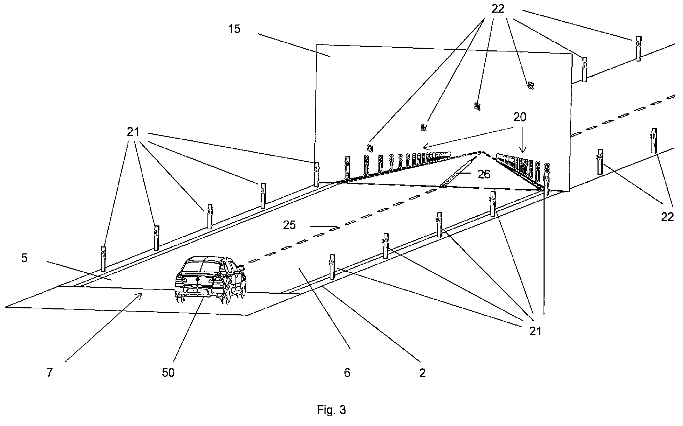

Die Fig. 2 zeigt das Innere des Tunnels 1 mit den großflächigen Leinwänden 15, 15' in einer Ansicht von links und Fig. 3 das Innere des Tunnels 1 mit den großflächigen Leinwänden 15, 15' in einer Ansicht von rechts.

Der Lichtprüftunnel 1 ist in einem Raum angeordnet, deren Länge dt kürzer als 80 m ist, in einer vorteilhaften Ausführung 50 m. Auf dem Fußboden 2 des Raumes, der wenigstens 8 m breit ist, sind zwei Fahrspuren 5, 6 und ferner die vertikalen sowie horizontalen Verkehrszeichen angebracht (aufgemalt), damit die Fahrbahn 7 visuell einer zweispurigen Straße der 1. Ordnung entspricht und die Fahrzeuge 50 in beiden Spuren 5, 6 angeordnet beurteilt werden können. Die Fahrbahn 7 weist die Leitposten mit Rückstrahlern 21 auf. Die Höhe des Tunnel 1 beträgt größenordnungsweise einige Meter.

An der Wand 3 am Ende des Tunnels 1 ist wenigstens eine großflächige Leinwand 15, 15' angeordnet. Die Fig. 1 zeigt beide Leinwände 15, 15' - für die linke sowie rechte Seite. In Wirklichkeit kann das System auch nur mit einer Leinwand angewendet werden. Beide sind konstruktionsseitig identisch und mechanisch voneinander unabhängig. Der Grund für die Nutzung von zwei Leinwänden liegt insbesondere in der Möglichkeit der visuellen Beurteilung des Lichtbildes der Fahrzeugscheinwerfer 50 mit Links- sowie Rechtslenkung. Wird einer der Leinwände 15, 15' in die Arbeitsposition abgewickelt, erstreckt sich diese Leinwand 15, 15' im Prinzip über die Wand am Ende des Tunnels 3 und verdeckt diese im Wesentlichen komplett ab.

Beide Leinwände 15, 15' sind zwischen den Wänden des Lichtprüftunnels 1 mithilfe der Fahrschienen 10, 10' und Reiter aufgespannt. Die Reiter sind mit einem Ende fest mit den Leinwänden 15, 15' verbunden und mit dem zweiten Ende verschiebbar in Fahrschienen 10, 10' gelagert. Für den Wechsel der rechten und linken Sicht dienen zwei in Wickelwellen 12, 12' angeordnete fernbediente Rohrmotoren. An diesen Wellen 12, 12' sind die Leinwände mit Seilen befestigt, diese Verbindung stellt die Bewegung der Leinwände 15, 15' nach oben und nach unten svsp entsprechend dem Bedarf sicher. Die mechanischen Teile sind mit Vorhängen aus extrem lichtschluckenden Stoffen abgedeckt, zum Beispiel aus extrem lichtschluckendem Samt (sog. Mitternacht Samt).

Das System als Gesamtheit simuliert treu die fortführende Fahrbahn 7 abwechselnd für beide Fahrer in Fahrzeugen 50 mit den zu beurteilenden Scheinwerfern. Die Länge des Tunnels 1 kann so kürzer als 80 m sein, in vorteilhafter Ausführung sogar 50 m.

Auf den Leinwänden 15, 15' sind Formen von Gegenständen aus verschiedenen hellen und reflektierenden Stoffen angebracht, welche die fortführende Fahrbahn 7 simulieren. Die Gegenstände aus verschiedenen hellen und reflektierenden Stoffen stellen die die Fahrbahn abgrenzenden Leitpfosten 20 und/oder horizontale Verkehrszeichen 26 dar.

Die großflächige Leinwand 15, 15' besteht aus verschiedenen lichtschluckenden Texturen, in vorteilhafter Ausführung zum Beispiel aus extrem lichtschluckendem Samt (sog. Mitternacht Samt).

## Patentansprüche

1. System einer die fortführende Fahrbahn (7) im Lichtprüftunnel (1) simulierenden künstlichen Perspektive, wobei an der Wand (3) am Ende des Lichtprüftunnels (1), dessen Länge (dt) kleiner als 80 m ist, wenigstens eine Leinwand (15, 15') angeordnet ist, **dadurch gekennzeichnet, dass** auf der Leinwand (15, 15') Formen von Gegenständen aus verschiedenen hellen und reflektierenden Stoffen angebracht sind, welche die fortführende Fahrbahn (7) simulieren.

2. System einer die fortführende Fahrbahn (7) simulierenden künstlichen Perspektive nach Anspruch 1, **dadurch gekennzeichnet, dass** die Gegenstände aus verschiedenen hellen und reflektierenden Stoffen die die Fahrbahn abgrenzenden Leitpfosten (20) und/oder horizontale Verkehrszeichen (26) darstellen.

3. System einer die fortführende Fahrbahn (7) simulierenden künstlichen Perspektive nach vorgenannten Ansprüchen, **dadurch gekennzeichnet, dass** die Leinwand (15, 15') zwischen den Wänden des Lichtprüftunnels (1) mithilfe der Fahrschienen (10, 10') und Reiter aufgespannt ist, wobei die Leinwand (15, 15') mittels eines in der Wickelwelle (12, 12') angeordneten ferngesteuerten Rohrmotor auf- und abwickelbar (svsp) ist.

4. System einer die fortführende Fahrbahn (7) simulierenden künstlichen Perspektive nach dem Anspruch 3, **dadurch gekennzeichnet, dass** die Leinwand (15, 15') an den Wickelwellen (12, 12') mittels Seile (11,11') befestigt ist.

5. System einer die fortführende Fahrbahn (7) simulierenden künstlichen Perspektive nach den Ansprüchen 3 und 4, **dadurch gekennzeichnet, dass** es zwei Leinwände (15, 15') für die rechte und linke Sicht umfasst, wobei jede der Leinwände eigenen Mechanismus für das Ab- und Aufwickeln (svsp) aufweist.

## Claims

1. System for an artificial perspective simulating the continued roadway (7) in a light testing tunnel (1), wherein at least one screen (15, 15') is arranged on the wall (3) at the end of the light testing tunnel (1), the length (dt) of which is less than 80 m, **characterized in that** shapes of objects of various light and reflective materials that simulate the continued roadway (7) are provided on the screen (15, 15').

2. System for an artificial perspective simulating the continued roadway (7) according to Claim 1, **characterized in that** the objects of various light and reflective materials represent the marker posts (20) delineating the roadway and/or horizontal traffic signs (26).

3. System for an artificial perspective simulating the continued roadway (7) according to the preceding claims, **characterized in that** the screen (15, 15') is mounted between the walls of the light testing tunnel (1) with the aid of the running rails (10, 10') and slides, wherein the screen (15, 15') can be wound up and unwound (svsp) by means of a remote-controlled tubular motor arranged in the winding shaft (12, 12').

4. System for an artificial perspective simulating the continued roadway (7) according to Claim 3, **characterized in that** the screen (15, 15') is fastened to the winding shafts (12, 12') by means of cables (11, 11').

5. System for an artificial perspective simulating the continued roadway (7) according to Claims 3 and 4, **characterized in that** it comprises two screens (15, 15') for viewing to the right and to the left, each of the screens having its own mechanism for unwinding and winding up (svsp).

## Revendications

1. Système de perspective artificielle simulant la chaussée en amont (7) dans un tunnel d'essai de lumière (1), au moins une toile (15, 15') étant disposée contre la paroi (3) à l'extrémité du tunnel d'essai de lumière (1), dont la longueur (dt) est inférieure à 80 m, **caractérisé en ce que** des formes d'objets en différentes matières claires et réfléchissantes sont appliquées sur la toile (15, 15'), lesquelles simulent la chaussée en amont (7).

2. Système de perspective artificielle simulant la chaussée en amont (7) selon la revendication 1, **caractérisé en ce que** les objets en différentes matières claires et réfléchissantes représentent des balises (20) délimitant la chaussée et/ou une signalisation routière horizontale (26).

3. Système de perspective artificielle simulant la chaussée en amont (7) selon les revendications précédentes, **caractérisé en ce que** la toile (15, 15') est tendue entre les parois du tunnel d'essai de lumière (1) à l'aide de rails de roulement (10, 10') et de cavaliers, la toile (15, 15') pouvant être enroulée et déroulée (svsp) au moyen d'un moteur tubulaire à commande à distance disposé dans l'arbre d'enroulement (12, 12').

4. Système de perspective artificielle simulant la chaussée en amont (7) selon la revendication 3, **caractérisé en ce que** la toile (15, 15') est fixée aux arbres d'enroulement (12, 12') au moyen de câbles (11, 11').

5. Système de perspective artificielle simulant la chaussée en amont (7) selon les revendications 3 et 4, **caractérisé en ce qu'**il comprend deux toiles (15, 15') pour la vue à droite et la vue à gauche, chacune des toiles présentant son propre mécanisme d'enroulement et de déroulement (svsp).
